# EUROPEAN PATENT APPLICATION

(11) **EP 3 474 002 A1**
(43) Date of publication of application: **24.04.2019**
(21) Application number: 17815449.8
(22) Date of filing: 21.06.2017
(51) Int. Cl.: G01N 21/65

(54) **SIMPLE SENSING METHOD EMPLOYING RAMAN SCATTERING**

(30) Priority: 21.06.2016 JP 2016122885
(71) Applicant: Nissan Chemical Corporation, Tokyo 103-6119 (JP)
(72) Inventor: FURUSHO, Hitoshi, Funabashi-shi Chiba 274-8507 (JP)
(74) Representative: Hoffmann Eitle
(86) International application number: PCT/JP2017/022867
(87) International publication number: WO 2017/221981

(57) **Abstract**

There is provided a method that enables a simple system to detect surface-enhanced Raman scattered light having a target wavelength by adapting a mirror unit used in a conventional fluorescence microscope. A detection system for detecting surface-enhanced Raman scattered light using a surface-enhanced Raman scattering probe into which a metal nanoparticle and a Raman active molecule are integrated, the detection system comprising:
a light source configured to emit excitation light;
a first light-splitting element configured to reflect light, in a specific wavelength region, of excitation light incident at a specific angle from the light source;
a sample that contains the surface-enhanced Raman scattering probe, and emits scattered light when irradiated with reflected light from the first light-splitting element;
a second light-splitting element being the same as or different from the first light-splitting element and configured to allow light in a wavelength region different from the specific wavelength region to be transmitted therethrough when receiving the scattered light;
a light-absorbing filter configured to receive the scattered light transmitted and allow Raman scattered light of the received scattered light in a specific wavelength region to pass therethrough; and
a light-receiving component configured to detect enhanced Raman scattering when receiving the Raman scattered light passing through the light-absorbing filter.

## Description

### TECHNICAL FIELD

The present invention relates to a molecule sensing method using surface-enhanced Raman scattered light. Specifically, the present invention provides a technique for efficiently detecting surface-enhanced Raman scattering from a surface-enhanced Raman scattering probe on the surface of a measuring object without using a spectroscope and, in particular, relates to a technique useful for detecting a trace amount of a specimen such as a biological tissue.

### BACKGROUND ART

Surface-enhanced Raman scattering (SERS) is a characteristic feature that is specifically observed in organic molecules adsorbed onto the surface of metal.

One of reasons why this surface-enhanced Raman scattering draws attention is that an oscillation spectrum can be obtained even from a single molecule or a single particle. This enables detection of a trace amount of a chemical substance for biomolecular recognition, for example, and various studies have been actively performed (Non-Patent Documents 1, 2, and 3).

Raman scattering is a physical phenomenon quite unsuitable for such trace detection originally due to its characteristics. The reason for this is considered as follows.

Raman scattering is caused by a collision of a molecule to be measured with a photon emitted from laser light. For example, the number of photons emitted from an argon laser of a wavelength of 488 nm can be estimated to be about 2.5×10¹⁸ per second under an output power of 1 W. Among them, the number of photons that can collide with molecules to be measured is about 10¹³ to 10¹⁵, whereas most of the photons pass through without colliding with the molecules. Such a small number of photons collide with molecules to be measured in two collision modes of elastic collision and inelastic collision. In elastic collision, energy is not transferred between molecules and photons, and scattering caused by this collision mode is called "Rayleigh scattering". In Rayleigh scattering, energy is not transferred between photons and molecules, and thus the frequency of scattered light is accordingly the same as the wavelength of incident light. Most of the collisions between molecules and photons with a low occurrence rate as described above are elastic scattering, and thus most of the scattered light is Rayleigh scattering.

In inelastic scattering, on the contrary to elastic scattering, a photon transfers its energy to a molecule when colliding with the molecule. Thus, the frequency of the scattered light differs from the frequency of the incident light in contrast to Rayleigh scattering. This scattering is called Raman scattering. In particular, when the frequency of Raman scattered light is higher than the frequency of incident light (when a photon obtains energy from a molecule), such scattering is called anti-Stokes Raman scattering (scattering that is detected on a shorter wavelength side than in Rayleigh scattering). When the frequency of Raman scattered light is conversely lower than the frequency of incident light (when a photon gives energy to a molecule), such scattering is called Stokes Raman scattering (scattering that is detected on a longer wavelength side than in Rayleigh scattering). The number of photons causing such inelastic collision is about 1/10⁷ of the total number of colliding photons. In other words, the number of photons colliding with molecules to be measured, and even coming into inelastic collision therewith, to cause Raman scattering is much smaller than the number of incident photons. This leads to low detection sensitivity, and thus Raman scattered light has been rarely used as means of microanalysis.

However, in the early 1970s, a large number of studies on resonance Raman, including the measurement of a resonance Raman scattering spectrum of gaseous halogen molecules reported by W. Holzer et al. (Non-Patent Document 4), were started to be reported. With an increase in scattering intensity achieved by resonance Raman scattering (the intensity is increased typically about 10³ to 10⁵ times by this resonance Raman effect), Raman scattering has drawn much attention. The resonance Raman is an effect of significantly increasing the intensity of a Raman band derived from an oscillation of a chromophore part corresponding to the absorption band when excitation light having a wavelength overlapping the absorption band of a certain molecule is used to measure Raman scattering. This enabled the Raman spectrum measurement of dye at a concentration of only several µM.

Later, in 1977, research groups of P. P. Van Duyne et al. (Non-Patent Document 5) and J. A. Creighton et al. (Non-Patent Document 6) independently found surface-enhanced Raman scattering. Three years before that, another research group of Fleischmann et al. actually observed this phenomenon, but they seemed to fail to recognize an increase in the scattering cross section as with the resonance Raman effect.

Surface-enhanced Raman scattering (SERS) generally means a phenomenon in which the Raman scattering intensity of a certain type of molecule adsorbed onto the surface of a metal electrode, sol, crystal, vacuum-evaporated film, or semiconductor is significantly enhanced more than when the molecule is present in a solution. However, this phenomenon still involves many unclear mechanisms. Surface-enhanced Raman scattering is observed on gold, silver, copper, platinum, and nickel, for example. A known feature of this surface-enhanced Raman is that the enhancement effect is great especially on silver and gold. The typical physical properties of SERS exhibit the following dependencies.
1) The surface roughness of metal plays some roles in the appearance of surface-enhanced Raman scattering characteristics.
2) A surface-enhanced Raman scattering spectrum typically exhibits clear wavelength dependence.
3) A surface-enhanced Raman scattering intensity depends on the orientation of molecules adsorbed on the surface of metal, and also depends on the distance from the surface of the metal.

Two mechanisms have been proposed for the appearance of the surface-enhanced Raman scattering characteristics so far. One of them is a surface plasmon model. Under this model, a reflectance spectrum is regarded as absorption of surface plasmon generated by collision of excitation light with the surface of metal, and it is assumed that surface-enhanced Raman scattering is caused by coupling between molecular oscillation of the adsorbed molecule and excitation of the surface plasmon. The other model is called a charge transfer model. Under this model, a reflectance spectrum is regarded as absorption of a complex formed by the surface of metal and a molecule, and it is assumed that surface-enhanced Raman scattering is caused by the resonance Raman effect due to this absorption.

Although these mechanisms have not yet been elucidated, it was found that the scattering intensity increases about 10¹¹ to 10¹⁴ in the surface-enhanced Raman scattering in which the resonance Raman condition described earlier overlaps the surface-enhanced Raman scattering condition, which expands the potential of single molecule spectroscopy. Due to the high sensitivity, surface-enhanced Raman scattering has already started to be applied to qualitative microanalysis.

In molecular recognition using surface-enhanced Raman scattering (SERS), forming a surface plays a significantly important role.

Examples of a technique on trace detection and molecular recognition to which surface-enhanced Raman scattering is applied include a nano-Raman probe into which a metal nanoparticle generating a significantly strong local electric field and an optically functional molecule are integrated. About this, for example, a method of adsorbing a low-molecular aromatic ring compound onto surfaces ofnanoparticles by direct electrostatic interaction, and nanoparticles onto surfaces of which reporter molecules such as rhodamine, naphthalene, and quinoline having thiol ends are adsorbed (Non-Patent Document 7), for example, have been reported. These techniques have been applied as a surface-enhanced Raman scattering probe to a molecular recognition sensor and a pH sensor for nanoparticles (Non-Patent Document 8).

Examples of known methods for synthesizing surface-enhanced Raman scattering particles include a method for synthesizing a nano flake-like metal composite material (Patent Document 1), a method of adsorbing dye (Raman active molecule) such as rhodamine 6G onto the surface of nano-porous material (Patent Document 2), and a method using gold nanoparticles in which gold nanorods are immobilized onto a substrate and enhanced Raman scattering of molecules on the surface thereof is used for analysis (Patent Document 3).

### Prior Art Documents

### Patent Documents

Patent Document 1: Japanese Patent Application Publication No. 2009-061580
Patent Document 2: Japanese Patent Application Publication No. 2008-184671
Patent Document 3: Japanese Patent Application Publication No. 2005-233637
Patent Document 4: Japanese Patent No. 5835584

### Non-Patent Documents

Non-Patent Document 1: ACS Nano 2 (4) 612-616 (2008)
Non-Patent Document 2: Anal. Chem., 79, 6927-6932 (2007)
Non-Patent Document 3: Anal. Chem., 77, 6134-6139 (2005)
Non-Patent Document 4: J. Chem. Phys. 52, 399 (1970)
Non-Patent Document 5: J. Electroanal. Chem., 84, 1 (1977)
Non-Patent Document 6: J. Am. Chem. Soc., 99, 5215 (1977)
Non-Patent Document 7: Langmuir 23, 10539-10545 (2007)
Non-Patent Document 8: Nano Lett. Vol. 7, No. 9, 2819-2823 (2007)
Non-Patent Document 9: J. Am. Chem. Soc. Vol. 131, 7518-7519 (2009)

### SUMMARY OF THE INVENTION

### Problem to be Solved by the Invention

Examples of a molecular recognition method that is generally used include immunoblotting. This is a method for detecting a specific protein, and is used to detect a specific protein that is a specific antibody protein modified with a labeled molecule and is transferred (blotted) onto a membrane. Specifically, in this method, protein separated by electrophoresis is blotted onto a membrane, and the surface of this blotted membrane is then coated with a blocking agent. The resulting membrane is acted upon by a primary antibody for recognizing a target protein (antigen), and the primary antibody is then acted upon by a secondary antibody into which a label having molecular recognition ability (molecular recognition probe such as a fluorescent molecule) has been added. Finally, the label is detected (e.g., by fluorescence detection), whereby the target protein is detected. This method is commonly called "western blotting".

However, in molecular recognition using the above-described western blotting, misrecognition problematically occurs when a target protein and another protein are located close to each other or overlap each other in separating proteins by electrophoresis at the beginning.

Furthermore, it has been pointed out that, when fluorescent molecules are used as molecular recognition probes, fluorescent molecules aggregate together within a very narrow closed region in molecular recognition, which causes energy transfer during fluorescence emission of the fluorescent molecules, and thus the fluorescence intensity problematically decreases, for example. Particularly in biomolecular recognition, in order to prevent a specimen from being damaged by a laser beam, a red fluorescent agent is often used, and such problems are more likely to occur.

Furthermore, the most serious problem in the fluorescence detection method is background fluorescence (noise). One of causes of this is fluorescence (intrinsic fluorescence) that the specimen itself has, which often leads to vary large background noise particularly in the case of biomaterial. Thus, when the amount of fluorescence probes is very small (that is, the amount of target material is very small), a situation may occur in which this background fluorescence (noise) and fluorescence from the fluorescence probes cannot be distinguished.

In detection using Raman scattering, a Raman spectrometer is generally used. In this apparatus (spectroscope), Raman scattered light obtained from the surface of a sample is split into beams by a diffraction grating, and signals corresponding to the individual beams thus split are detected by a CCD sensor, and thus the amount of information that can be obtained is much larger than that by the fluorescence detection.

For example, in the case of fluorescence detection, information that can be obtained is limited to fluorescence intensity, and thus information that can be obtained in the detection may be only the concentration of a detected substance. Particularly in fluorescence detection of biological material, it is very important to perform control so that the signal-to-noise ratio (S/N ratio) can be kept high, because fluorescence emission of biological material itself (intrinsic fluorescence) may become background noise.

By contrast, in detection with Raman scattered light, information that can be obtained is not limited to the concentration of a detected substance based on the Raman scattering intensity, and information on bonds included in the substance can be advantageously obtained from its optical spectrum, for example. It can be said that Raman scattering signals obtained from surface-enhanced Raman scattering (SERS) advantageously provide a significantly high S/N ratio because the signals from SERS are much stronger than general Raman scattering signals.

However, a conventional Raman scattering spectrometer is very expensive, and is not suitable for simple measurement.

### Means for Solving the Problem

In view of the problems described above, the inventors of the present invention have contemplated utilizing such a significantly high S/N ratio of the surface-enhanced Raman scattering and providing a substance detection system using a simpler method. The inventor has found a method that enables a simple system to detect surface-enhanced Raman scattered light having a target wavelength by adapting a mirror unit used in a conventional fluorescence microscope, and specifically by combining a light-splitting element that reflects light in a specific wavelength region and allows light in a wavelength region different from the specific wavelength region to be transmitted therethrough and a light-absorbing filter that allows only light in the specific wavelength region to pass therethrough, and thus has completed the present invention.

Specifically, the present invention relates to, as a first aspect, a detection system for detecting surface-enhanced Raman scattered light using a surface-enhanced Raman scattering probe into which a metal nanoparticle and a Raman active molecule are integrated, the detection system comprising:
a light source configured to emit excitation light;
a first light-splitting element configured to reflect light, in a specific wavelength region, of excitation light incident at a specific angle from the light source;
a sample that contains the surface-enhanced Raman scattering probe, and emits scattered light when irradiated with reflected light from the first light-splitting element;
a second light-splitting element being the same as or different from the first light-splitting element and configured to allow light in a wavelength region different from the specific wavelength region to be transmitted therethrough when receiving the scattered light;
a light-absorbing filter configured to receive the scattered light transmitted and allow Raman scattered light of the received scattered light in a specific wavelength region to pass therethrough; and
a light-receiving component configured to detect enhanced Raman scattering when receiving the Raman scattered light passing through the light-absorbing filter.

As a second aspect, the present invention relates to the detection system according to the first aspect, in which the first light-splitting element and the second light-splitting element are the same dichroic mirror, and the specific angle is 45°±10°.

As a third aspect, the present invention relates to the detection system according to the second aspect further comprising a filter cube for epi-fluorescence microscopy that is suitably arranged such that the dichroic mirror is disposed at 45°±10° with respect to an optical axis of the excitation light incident and the light-absorbing filter is disposed at 90°±20° with respect to an optical axis of the scattered light transmitted.

As a fourth aspect, the present invention relates to the detection system according to any one of the first aspect to the third aspect, in which the light source is a laser.

As a fifth aspect, the present invention relates to the detection system according to any one of the first aspect to the third aspect, in which the light source is a xenon arc lamp, a mercury lamp, or an LED light source.

### Effects of the Invention

According to the present invention, with this simple system even without using a Raman spectrometer (spectroscope), substance detection can be performed by utilizing a mirror unit of a fluorescence microscope used for conventional fluorescence detection, for example, to detect surface-enhanced Raman scattered light having a target wavelength from an organic molecule (surface-enhanced Raman scattering probe) immobilized at an adjacent interface between metal nanoparticles.

Particularly in conventional fluorescence detection, because fluorescence unique to a specimen emitted from the specimen (intrinsic fluorescence) always exists as background noise, it is difficult in trace detection to separate fluorescence derived from a target molecular recognition probe (fluorescent molecule) from this noise. In contrast, Raman scattered light can be clearly distinguished from scattered light from the specimen itself because it is a spectrum unique to a Raman probe.

Furthermore, the intensity of a Raman scattering spectrum of the specimen itself is naturally very low, whereas the intensity of surface-enhanced Raman scattering (SERS) derived from the surface-enhanced Raman scattering probe is significantly high, and thus a higher S/N ratio can be obtained in detection using the surface-enhanced Raman scattering than in the fluorescence detection. Consequently, detection with high sensitivity can be performed by the simple system described above.

### BRIEF DESCRIPTION OF THE DRAWINGS

FIG. 1 is a graph illustrating surface-enhanced Raman shift (cm⁻¹) from the surface of gold, obtained when surface-enhanced Raman scattering particles (particles that are gold nanoparticles carrying malachite green on their surfaces) prepared in Example 1 are used as a surface-enhanced Raman scattering probe.
FIG. 2 is a graph illustrating surface-enhanced Raman wavelength (nm) from the surface of gold, obtained when the surface-enhanced Raman scattering particles (particles that are gold nanoparticles carrying malachite green on their surfaces) prepared in Example 1 are used as a surface-enhanced Raman scattering probe.
FIG. 3 is a graph illustrating a relation between surface-enhanced Raman scattering wavelength of the surface-enhanced Raman scattering (SERS) particles prepared in Example 1 and light transmission wavelength of various light-absorbing filters (transmission center wavelengths of the respective filters are A: 685 nm, B: 690 nm, C: 700 nm).
FIG. 4 is a graph illustrating light transmission characteristics of a light-absorbing filter used in a mirror unit used in Examples (transmission center wavelength: 685 nm).
FIG. 5 is a graph illustrating light transmission characteristics of a dichroic mirror used in Examples.
FIG. 6 is a diagram illustrating one example of a system for detecting surface-enhanced Raman scattered light according to the present invention.
FIG. 7 is a diagram illustrating an observation photograph of Raman scattered light from surfaces of K562 cells detected in Example 4.

### MODES FOR CARRYING OUT THE INVENTION

As described above, although the above-described method (immunoblotting) for detecting biological material in which a fluorescent molecule is used as a molecular recognition probe is widely used conveniently, intrinsic light emission of the biological material becomes background fluorescence (noise), and thus a situation may occur in which it is difficult to increase the S/N ratio when a target substance to be detected appears in trace amounts.

In view of this, the inventor of the present invention focused on the point that the intensity of surface-enhanced Raman scattering is significantly higher than the intensity of general Raman scattering. Previously, spectrum analysis using a spectroscope has been mainly studied in the study field of Raman scattering, and application to single wavelength detection has not been reported. In order to detect biological material in trace amounts described above, the inventor of the present invention has worked on detection of a specific wavelength using Raman scattering instead of the fluorescence detection for the first time, has achieved a high S/N ratio by using a surface-enhanced Raman scattering probe, and has completed a system that can easily and sensitively detect a target substance appearing in trace amounts with a simple system without using a conventional spectroscope by adapting a mirror unit of a conventional fluorescence microscope, for example.

Specifically, focusing on scattered light, in a specific wavelength (nm), of Raman scattering spectrum obtained by the surface-enhanced Raman scattering probe, the inventor has found that Raman scattered light can be detected by combining a filter that, when light of an excitation wavelength is emitted to a sample, allows only Raman scattered light in the specific wavelength (nm) to be transmitted therethrough and light-splitting elements such as a dichroic mirror.

The present invention will be described hereinafter in detail.

### <System for detecting Surface-Enhanced Raman Scattered Light>

A system for detecting surface-enhanced Raman scattered light (hereinafter, called "Raman-scattered-light detection system") according to the present invention comprises a light source configured to emit excitation light, a first light-splitting element configured to reflect light in a specific wavelength region, a sample containing a surface-enhanced Raman scattering probe, a second light-splitting element configured to allow light in a wavelength region different from the specific wavelength region to be transmitted therethrough, a light-absorbing filter configured to allow light in a specific wavelength region to pass therethrough, and a light-receiving component configured to detect enhanced Raman scattered light.

The following describes each configuration according to the present invention in detail.

### 1) Light source configured to emit excitation light

As an excitation light source, although not limited to, a laser is preferably used so as to efficiently detect Raman scattered light from a measuring object (sample), and various types of lasers may be used depending on intended purposes (measuring objects). As the light source, a xenon arc lamp, a mercury lamp, and an LED light source, for example, may be used.

If Raman scattered light from a measuring object overlaps fluorescence, a favorable Raman spectrum cannot be obtained. However, the wavelength of Raman scattered light varies depending on the excitation wavelength of excitation light, and thus it is desirable to select a light source in consideration of Raman scattering characteristics and fluorescence characteristics of a measuring object.

### 2) Light-splitting element

The light-splitting elements used in the present invention are each an element configured to reflect light, in a specific wavelength region, of light incident at a specific angle and to allow light in a wavelength region different from the specific wavelength region to be transmitted therethrough.

In the Raman-scattered-light detection system according to the present invention, the first light-splitting element is an element configured to reflect light, in the specific wavelength region (e.g., a wavelength region that causes Raman scattering of interest to be generated from the sample), of excitation light incident at the specific angle from the light source toward the sample described later. In other words, the first light-splitting element is an element having a function of emitting reflected light to the sample. The specific wavelength region is determined by the sample, that is, a Raman active molecule used in the surface-enhanced Raman scattering probe, for example. The second light-splitting element is an element configured to allow light in a wavelength region different from the specific wavelength region to be transmitted therethrough when receiving scattered light from the sample described later. In other words, the second light-splitting element is an element having a function of allowing the scattered light from the sample to pass therethrough toward the light-absorbing filter described later. For example, the second light-splitting element is an element that does not substantially allow Rayleigh scattered light of the scattered light from the sample to be transmitted therethrough but allows the other scattered light such as Raman scattered light to be transmitted therethrough.

The Raman-scattered-light detection system according to the present invention may include two different light-splitting elements that are the first light-splitting element configured to reflect light in a specific wavelength region and the second light-splitting element configured to allow light having a wavelength different from the specific wavelength region to be transmitted therethrough. Furthermore, both of the first light-splitting element and the second light-splitting element may include two or more light-splitting elements depending on, for example, wavelengths and intensities of reflected light (excitation light) to be emitted to the sample described later and scattered light from the sample to be allowed to pass toward the light-absorbing filter described later.

Alternatively, in the Raman scattering detection system according to the present invention, the first light-splitting element and the second light-splitting element may be the same element. In other words, this light-splitting element may have both of a function of reflecting excitation light to emit the reflected light to the sample and a function of allowing scattered light from the sample to be transmitted therethrough toward the light-absorbing filter.

In a preferred embodiment, the first light-splitting element and the second light-splitting element are integrated into the same element, and as this light-splitting element, a dichroic mirror is preferably used, or a semi-transparent mirror having no wavelength selectivity may be used instead.

Among these, as the light-splitting element, a dichroic mirror is more preferably used that reflects light, in a specific wavelength region, of light incident at 45°±10° and allows light in a wavelength region different from the specific wavelength region to be transmitted therethrough.

### 3) Sample containing a surface-enhanced Raman scattering probe

The sample as a measuring object contains a surface-enhanced Raman scattering (SERS) probe that emits scattered light when receiving reflected light from the first light-splitting element.

The surface-enhanced Raman scattering (SERS) probe for generating a surface-enhanced Raman scattering signal is not limited to a particular probe. For example, onto the surfaces of metal nanoparticles having a particle diameter of several nanometers to several hundred nanometers, e.g., about 40 nm, although not limited to, dye molecules are adsorbed as the Raman active molecule, and the resulting nanoparticles are further flocculated so as not to sediment, whereby the SERS probe can be produced (see Patent Document 4). Furthermore, onto these surface-enhanced Raman scattering particles, although not limited to, molecular recognition probe molecules that enable recognition of a target specimen, such as nucleic-acid aptamers for recognizing a cell are adsorbed, whereby surface-enhanced Raman scattering cell recognition particles (SERS recognition particles) can be prepared. The surface-enhanced Raman scattering recognition particles are caused to react with the sample to recognize the specimen, and then Raman scattering measurement is performed, whereby the target specimen can be detected.

The metal nanoparticles described above are composed of, although not limited to, a metallic element having a resonance wavelength generating a surface plasmon resonance in regions ranging from an ultraviolet region to an infrared region. Examples of the metal nanoparticles include particles composed of a metallic element selected from, for example, gold, silver, copper, platinum, nickel, and aluminum. Among them, gold nanoparticles or silver nanoparticles are preferably used, and gold nanoparticles are more preferably used.

It is desirable that the metal nanoparticles have an average particle diameter of 1 nm to 500 nm, preferably 1 nm to 100 nm, more preferably 5 nm to 100 nm, and particularly preferably 5 nm to 50 nm, e.g., about 20 nm or about 40 nm.

Examples of the Raman active molecule described above include dye molecules selected from rhodamine 6G (R6G), crystal violet (CRV), coumarin, malachite green, and various food coloring agents. Condensed-ring compounds having some aromatic rings that are fused, for example, may also be used as the Raman active molecule.

As described above, when Raman scattered light of the surface-enhanced Raman scattering recognition particles is observed with a Raman spectrometer, a spectrum depending on the Raman probe can be obtained. The spectrum of Raman scattered light is generally represented by wave number (cm⁻¹). The spectrum (wave number) thus obtained is expressed by [wave number (cm⁻¹) = 1/λi - 1/λs], wherein the wavelengths of an incident laser beam and scattered light are λi and λs (cm), respectively. Thus, using this relational expression, the wave number and the wavelength can be converted therebetween. With attention being paid to the specific wavelength of a Raman scattering spectrum obtained based on the surface-enhanced Raman scattering recognition particles, the light-splitting elements described above and a light-transmitting filter described later, allowing light in the specific wavelength region to be emitted to the sample and allowing only Raman scattered light of interest to be transmitted, are selected.

### 4) Light-absorbing filter

In the present invention, as the light-absorbing filter, a filter that allows Raman scattered light in a specific wavelength region to pass therethrough may be selected among scattered light transmitted through the second light-splitting element. As described above, the wavelength of Raman scattered light varies depending on the excitation wavelength of excitation light, and thus the light-absorbing filter may be selected in consideration of Raman scattering characteristics of a measuring object. For example, a light-absorbing filter is selected that can allow Raman scattered light of interest to be transmitted therethrough toward the light-receiving component described later.

### 5) Light-receiving component

As the light-receiving component for detecting enhanced Raman scattering, although not limited to, for example, a CCD sensor may be used.

### 6) Filter cube

In the preferred embodiment of the present invention, a filter cube for epi-fluorescence microscopy may be used. With this filter cube, the light-splitting element (dichroic mirror) can be disposed at 45°±10° with respect to the optical axis of incident light (excitation light), and also the light-absorbing filter can be disposed at 90°±20° with respect to the optical axis of the transmitted scattered light. In general, when fluorescence detection is performed, an excitation filter is disposed in addition to the light-absorbing filter and the light-splitting elements in a filter cube, and these components constitute a mirror unit. However, in the case of Raman detection, a laser is commonly used as an excitation light source, and thus the excitation filter for selecting excitation light does not always have to be required. When a xenon arc lamp, a mercury lamp, or an LED light source described above is used as the light source, the excitation filter is preferably used to select excitation light.

As described above, in the present invention, by using equipment and apparatus used for an existing fluorescence microscope, a system for detecting surface-enhanced Raman scattered light having a target wavelength can be easily structured.

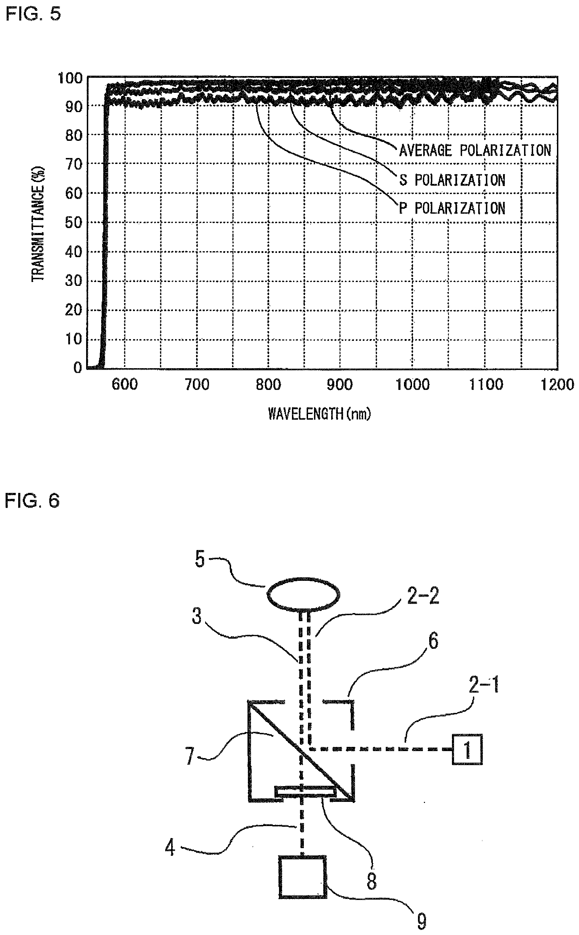

FIG. 6 illustrates one example of the system for detecting surface-enhanced Raman scattered light according to the present invention. In this example, one light-splitting element 7 serves as both of the first light-splitting element (reflection) and the second light-splitting element (transmission), and this light-splitting element 7 and the light-absorbing filter 8 are disposed in the filter cube 6 to constitute a mirror unit.

As depicted in FIG. 6, the excitation light (incident light) 2-1 emitted from the light source 1 is reflected by the light-splitting element 7, and the reflected excitation light (reflected light) 2-2 is emitted to the sample 5 (containing the surface-enhanced Raman scattering probe (not depicted)). The scattered light 3 excited by irradiation with the excitation light 2-2 from the sample 5 is transmitted through the light-splitting element 7 and the light-absorbing filter 8, and the Raman scattered light 4 having a target wavelength is received by the light-receiving component 9 such as a CCD camera, for example.

As for selection of the light-splitting element 7, when a detection probe for causing, for example, Stokes Raman scattering to appear is used, a dichroic mirror may be selected that reflects light having an excitation wavelength and allows light having a wavelength longer than the excitation wavelength to be transmitted therethrough. Specifically, when a probe obtained by adsorbing malachite green as a Raman active molecule onto gold nanoparticles used in Examples described later is used, by using a 530-nm laser for excitation light and using a mirror that reflects a 530-nm laser beam and allows light having a wavelength longer than 540 nm to be transmitted therethrough, target 683-nm Raman light can be introduced to the light-receiving component (detector).

When a semi-transparent mirror is used as the light-splitting element, by using a mirror that reflects 80% of light with the semi-transparent mirror and allows 20% of the light to be transmitted therethrough, Raman scattered light can be introduced to the detector on the basis of the same mechanism described above. In this case, a significantly high Raman scattering intensity is required.

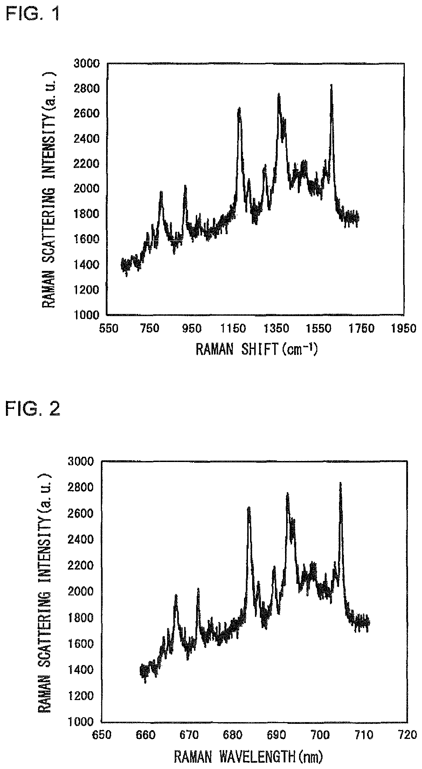

Because Raman scattered light transmitted through the light-splitting element 7 has various wavelengths as depicted in FIG. 2, for example, in order to extract light having a wavelength which is particularly focused on among them, the light-absorbing filter 8 that allows only a specific wavelength to be transmitted therethrough is used. In Examples described later, by using a light-absorbing filter that allows only light having a wavelength around 685 nm, for example, to be transmitted therethrough, only Raman scattered light having this emission wavelength can be introduced into the light-receiving component 9 (detector).

When an external electric field such as light is applied to metal nanoparticles, electrons on the surface of metal oscillate in response to its electric field oscillation, and an oscillating electric field associated with this oscillation is generated at an interface between particles. For example, when the particles come closer to each other, their oscillating electric fields are added together, thereby forming an enhanced electric field. The intensity of this enhanced electric field depends on the distance between adjacent particles, and increases as the distance between the particles decreases. However, the intensity reaches a maximum value at a certain distance, and when adjacent particles have been joined together, their particle form changes, which causes electric field intensity to be unevenly distributed. In view of this, it is important first to form a field in which metal particles can come closer to each other without being joined together. For example, in the present invention, surface-enhanced Raman scattering particles synthesized based on Patent Document 4 were used in Examples described later. About synthesis of the surface-enhanced Raman scattering particles, when, although not limited to, malachite green is used as the Raman active molecule, Raman scattered light obtained from the surface-enhanced Raman scattering probe using malachite green is as illustrated in FIG. 1. By using the above-described relational expression to convert the wave number (cm⁻¹) of Raman scattering spectrum thus obtained in the horizontal axis into the wavelength (nm), FIG. 2 is obtained. For example, when a spectrum of 683 nm in FIG. 2 is to be detected, although not limited in a fluorescence mirror unit of a fluorescence microscope to, a filter that allows light having a wavelength near 685 nm to be transmitted therethrough is used as the light-absorbing filter, whereby Raman scattered light emitted from malachite green can be observed with a conventional fluorescence microscope.

As described in the foregoing, the present invention is a very useful technique for simply detecting Raman scattered light without using a large Raman spectroscope for detecting Raman scattering as in the conventional art.

### Examples

Although in fhe following the present invention is described more specifically in more detail, using Examples, but the present invention is not limited to these.

### [Example 1: Synthesis of Surface-Enhanced Raman Scattering Particle Dispersion Liquid]

Into 190 microliters of gold nanoparticle dispersion liquid (manufactured by Sigma-Aldrich Corporation, particle diameter: 40 nm), 10 microliters of DNA aptamer adjusted in advance at 100 micromoles/liter was mixed. This mixture was stirred at room temperature for 17 hours, and then was left standing at 50°C at three hours, whereby aptamer-adsorbed gold particle dispersion liquid was obtained. To the aptamer-adsorbed gold particle dispersion liquid, 1 microliter of a malachite green solution the concentration of which was adjusted at 1 millimole/liter was added, and the resulting dispersion liquid was stirred at 1 hour. After stirring was completed, the dispersion liquid was centrifuged at 10,000 revolutions/second for 10 minutes to sediment particles, and surface-enhanced Raman scattering particles were collected. The particles were washed with water several times as needed. Subsequently, the particles were dispersed in a predetermined amount of water or water containing phosphate buffer or other salts, and the resulting liquid was used as surface-enhanced Raman scattering particle dispersion liquid.

### [Example 2: Measurement of Surface-Enhanced Raman Scattered Light]

The surface-enhanced Raman scattering particle dispersion liquid prepared in Example 1 was put into a quartz capillary tube having an inside diameter of 500 micrometers, and the surface-enhanced Raman scattering spectrum of this liquid was measured with a Raman spectroscope (530-nm laser, 20-fold objective lens) manufactured by HORIBA Ltd. Obtained results are each illustrated in FIG. 1 (horizontal axis: Raman shift) and FIG. 2 (horizontal axis: Raman wavelength).

### [Example 3: Selection of Mirror and Optical Filter to be installed in Fluorescence Filter Unit]

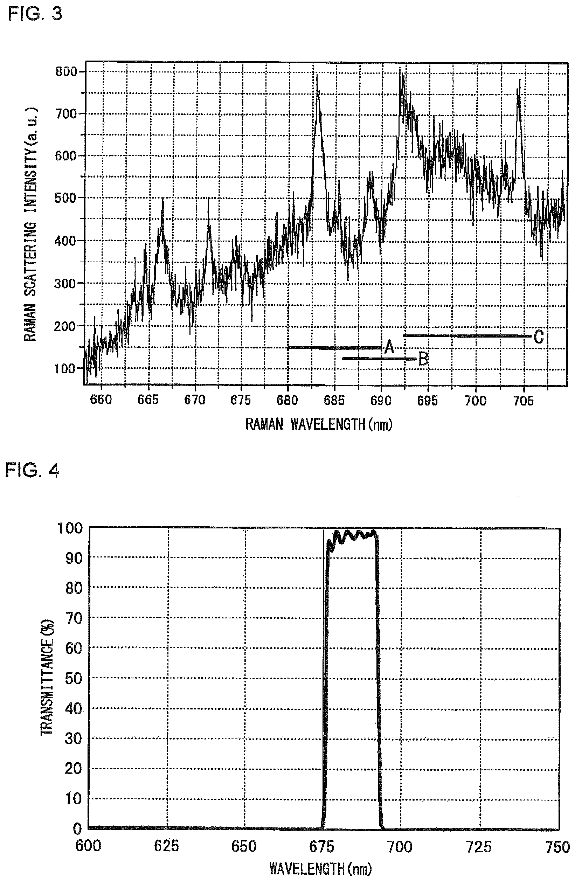

FIG. 3 illustrates a relation between surface-enhanced Raman scattering wavelength of the surface-enhanced Raman scattering particles prepared in Example 1 and light transmission wavelength of various light-absorbing filters. In FIG. 3, wavelength ranges denoted by A, B, and C indicate light transmission wavelength ranges of light-absorbing filters for transmission center wavelengths of 685 nm, 690 nm, and 700 nm, respectively.

FIG. 4 illustrates light transmission characteristics of the light-absorbing filter for a transmission center wavelength of 685 nm, and FIG. 5 illustrates light transmission characteristics of a dichroic mirror (that reflects 530-nm laser and allows light having wavelength longer than 540 nm to be transmitted therethrough).

By disposing the light-absorbing filter and the dichroic mirror in the filter cube as depicted in FIG. 6, only Raman scattered light can be easily extracted from the absorbing filter.

### [Example 4: Detection of Raman scattered Light on Cell Surface with CCD Camera]

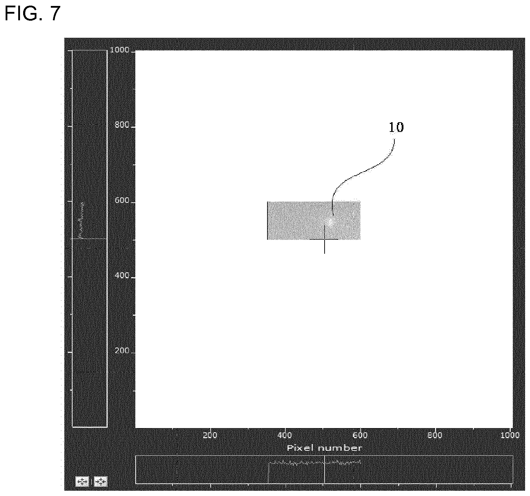

For example, when the DNA aptamer in Example 1 was a DNA aptamer having an affinity for K562 leukemia cells, K562 cells were cultivated first. Living cells and dead cells were separated to extract only the living cells. To the K562 cells of 1×10⁶ cells thus extracted, 5 microliters of the surface-enhanced Raman scattering particle dispersion liquid prepared in Example 1 was added, and the resultant mixture was left standing at 37°C for 1 hour. Subsequently, the cells were washed with a phosphate buffer liquid, and then the cell surface was observed with a fluorescence microscope in which the mirror unit described in Example 3 was installed. Consequently, Raman scattered light from the cell surface as depicted in FIG. 7 could be observed with a CCD camera.

### Description of the Reference Numerals

1 Light source
2 Excitation light
   2-1 Excitation light (incident light)
   2-2 Excitation light (reflected light)
3 Scattered light
4 Raman scattered light
5 Sample
6 Filter cube
7 Light-splitting element (dichroic mirror)
8 Light-absorbing filter
9 Light-receiving component (CCD camera)
10Raman scattered light from K562 cell surface

## Claims

1. A detection system for detecting surface-enhanced Raman scattered light using a surface-enhanced Raman scattering probe into which a metal nanoparticle and a Raman active molecule are integrated, the detection system comprising:
a light source configured to emit excitation light;
a first light-splitting element configured to reflect light, in a specific wavelength region, of excitation light incident at a specific angle from the light source;
a sample that contains the surface-enhanced Raman scattering probe, and emits scattered light when irradiated with reflected light from the first light-splitting element;
a second light-splitting element being the same as or different from the first light-splitting element and configured to allow light in a wavelength region different from the specific wavelength region to be transmitted therethrough when receiving the scattered light;
a light-absorbing filter configured to receive the scattered light transmitted and allow Raman scattered light of the received scattered light in a specific wavelength region to pass therethrough; and
a light-receiving component configured to detect surface-enhanced Raman scattering when receiving the Raman scattered light passing through the light-absorbing filter.

2. The detection system according to claim 1, wherein the first light-splitting element and the second light-splitting element are the same dichroic mirror, and the specific angle is 45°±10°.

3. The detection system according to claim 2, further comprising a filter cube for epi-fluorescence microscopy that is suitably arranged such that the dichroic mirror is disposed at 45°±10° with respect to an optical axis of the excitation light incident and the light-absorbing filter is disposed at 90°±20° with respect to an optical axis of the scattered light transmitted.

4. The detection system according to any one of claims 1 to 3, wherein the light source is a laser.

5. The detection system according to any one of claims 1 to 3, wherein the light source is a xenon arc lamp, a mercury lamp, or an LED light source.
